# FASCICULE DE BREVET EUROPEEN

(11) **EP 1 750 789 B1**
(45) Date de publication et mention de la délivrance du brevet: **17.08.2011**
(21) Numéro de dépôt: 05777206.3
(22) Date de dépôt: 10.05.2005
(51) Int. Cl.: C08J 7/04, A61M 25/00

(54) **COMPOSITION DE POLYMERES MOULABLES A CARACTERE HYDROPHILE DURABLE, CANAUX POUR FLUIDES AQUEUX A BASE DE CETTE COMPOSITION, SYSTEME MICROFLUIDIQUE INCORPORANT CES CANAUX ET SON PROCEDE DE FABRICATION**
BESTÄNDIGE HYDROPHILE FORMBARE POLYMERZUSAMMENSETZUNG, WÄSSRIGE FLÜSSIGKEITSKANÄLE AUF BASIS DIESER ZUSAMMENSETZUNG, MIKROFLUIDISCHES SYSTEM MIT DIESEN KANÄLEN UND HERSTELLUNGSVERFAHREN DAFÜR
DURABLE HYDROPHILIC MOULDABLE POLYMER COMPOSITION, AQUEOUS FLUID CHANNELS BASED ON SAID COMPOSITION, MICROFLUIDIC SYSTEM INCORPORATING SAID CHANNELS AND METHOD FOR THE PRODUCTION THEREOF

(30) Priorité: 13.05.2004 FR 0405192
(43) Date de publication de la demande: 14.02.2007
(73) Titulaire: CENTRE NATIONAL DE LA RECHERCHE SCIENTIFIQUE (CNRS), 75016 Paris (FR); ECOLE NORMALE SUPERIEURE DE CACHAN, 94235 Cachan (FR); Association pour les transferts de technologie Du Mans, 72000 Le Mans (FR)
(72) Inventeur: GRISCOM, Laurent, F-35000 RENNES (FR); LE PIOUFLE, Bruno, F-91650 Breuillet (FR); LEGEAY, Gilbert, F-72650 SAINT SATURNIN (FR)
(74) Mandataire: Orès, Bernard
(86) Numéro de dépôt international: PCT/FR2005/001162
(87) Numéro de publication internationale: WO 2005/120620

(56) Documents cités:
- EP-A- 0 891 807
- US-A- 5 198 306
- US-A1- 2002 098 364

## Description

La présente Invention concerne une composition de polymères moulables modifiée en surface à caractère hydrophile durable, des canaux pour fluides aqueux à base de cette composition, un système microfluidique tel qu'une puce microfluidique comportant ces canaux, son procédé de fabrication et une puce microfluidique incorporant ledit système.

Les systèmes microfluidiques tels que les puces microfluidiques sont constitués de manière connue de substrats inertes et biocompatibles (i.e. utilisables comme support de culture cellulaire) sur lesquels sont formés des réseaux de canaux, et ils sont notamment adaptés pour localiser d'une manière ordonnée sur ces substrats le dépôt de protéines provenant de solutions aqueuses. Ces systèmes microfluidiques sont d'une importance majeure dans des domaines d'activité tels que le biomédical, la génétique, la pharmacologie et la chimie analytique, de synthèse ou combinatoire, du fait qu'ils permettent de réduire les durées de mesure, de validation et les volumes de réactifs nécessaires à des analyses.

Ces systèmes microfluidiques sont usuellement constitués d'un matériau polymérique souple, tel qu'une composition de caoutchouc réticulée à base d'un caoutchouc silicone. Avantageusement, on choisit un polydiméthylsiloxane (PDMS) à titre de caoutchouc silicone, essentiellement du fait qu'il s'agit d'un élastomère largement répandu, perméable aux gaz, inerte et biocompatible et qu'il est aisément moulable en permettant, à un coût réduit, une reproduction satisfaisante dans un micro-moule des microstructures destinées à former des canaux fluidiques à l'échelle du micromètre et même du nanomètre. En outre, la transparence à la lumière visible et l'absence de phénomène d'auto-fluorescence qui caractérise les PDMS autorisent divers modes d'observation microscopique des cellules à l'intérieur de ces microstructures.

Cependant, un inconvénient des PDMS est qu'ils présentent un caractère très hydrophobe, ce qui signifie que les parois des canaux des systèmes microfluidiques en PDMS ne sont pas mouillables par les liquides aqueux. C'est la raison pour laquelle on a cherché à développer des méthodes pour rendre les PDMS hydrophiles en surface. On sait de longue date que des traitements de surface par plasma permettent de conférer aux PDMS un état hydrophile satisfaisant. Néanmoins, il s'avère que cet état hydrophile n'est que momentané, du fait qu'il cesse à l'air libre au bout de quelques heures.

L'article de Papra A. et al., (Microfluidic Networks Made of Poly(dimethylsiloxane), Si, and Au Coated with Polyethylene Glycol for Patterning Proteins onto Surfaces, American Chemical Society, Langmuir, 2001, 17, 4090-4095) présente un procédé prévu pour conférer un caractère hydrophile plus durable à un système microfluidique qui est par exemple à base d'un PDMS, ce procédé consistant essentiellement (cf. page 4091) :
- à soumettre pendant dix secondes la surface du système microfluidique à un traitement d'oxydation par plasma d'oxygène, puis
- à immerger pendant deux heures à température ambiante le système ainsi traité dans une solution d'acide chlorhydrique en milieu aqueux comprenant un poly(éthylène glycol) di(triéthoxysilane) de masse moléculaire moyenne en poids (Mw) égale à 3400 g/mol (Si-PEG-Si ci-après), puis
- à laver le système obtenu, à le soumettre à des traitements de sonification, puis à le sécher et à le nettoyer,
- à soumettre pendant 10 minutes le système ainsi traité à une oxydation par une solution à base d'eau oxygénée et d'acide sulfurique,
- à laver à nouveau le système ainsi oxydé puis à le soumettre à de nouveaux traitements de sonification et de séchage,
- à immerger à nouveau pendant 18 heures à température ambiante le système obtenu dans ledit Si-PEG-Si en solution dans du toluène et en présence d'acide chlorhydrique pour obtenir, par réaction de greffage du Si-PEG-Si, un revêtement qui adhère au PDMS, puis
- à laver puis à soumettre à un traitement de sonification le système obtenu, afin d'éliminer les résidus non greffés.

Cet article indique que la surface du PDMS ainsi modifiée par greffage conserve un caractère hydrophile pendant environ trois semaines.

On notera que l'adhésion entre le Si-PEG-Si et le PDMS qui est obtenue par la mise en oeuvre de ces étapes d'oxydation et de greffage est réalisée grâce à la formation de liaisons covalentes de type siloxane.

Un inconvénient majeur de ce procédé réside dans sa complexité et dans la durée de sa mise en oeuvre relativement longue, notamment dues à l'utilisation de solvants, ainsi que dans la difficulté de se procurer dans le commerce le polymère précité Si-PEG-Si, le seul préconisé pour le greffage. Il en résulte un coût de fabrication relativement élevé pour ce système microfluidique, ce qui pénalise fortement ses possibilités d'industrialisation. Il est nécessaire de disposer de procédés simples, rapides et peu onéreux à mettre en oeuvre, afin de conserver un faible coût de fabrication, qui est constitué principalement par la production par moulage de systèmes microfluidiques avec des polymères thermoplastiques ou des élastomères hydrophobes.

Un but de la présente Invention est de remédier à ces inconvénients, et ce but est atteint en ce que les Demanderesses viennent de découvrir d'une manière surprenante que si, dans une composition de polymère non poreuse à base d'au moins un polymère moulable hydrophobe ayant des groupes oxygénés le long de la chaîne, on modifie ce dernier en surface par au moins un polymère hydrophile spécifiquement lié audit polymère moulable hydrophobe par des liaisons hydrogène liant des atomes d'hydrogène dudit polymère hydrophile à des groupes oxygénés présents le long de la chaîne dudit polymère moulable hydrophobe, alors cette composition de polymère présente en surface un caractère hydrophile qui est beaucoup plus durable que dans l'art antérieur, pouvant perdurer pendant plusieurs mois au contact de l'air ambiant.

Il en résulte que les compositions de polymères modifiées en surface selon l'Invention, telles que des compositions pour canaux de systèmes microfluidiques, présentent une mouillabilité par les fluides aqueux qui est à la fois satisfaisante et beaucoup plus durable que dans l'art antérieur, notamment en comparaison de la durée de trois semaines mentionnée dans l'article précité.

Les groupes oxygénés sont susceptibles d'être obtenus en soumettant la composition non poreuse de polymère moulable à un traitement de surface par plasma, de préférence par un plasma froid d'oxygène ou d'argon. Ce traitement de surface est mis en oeuvre dans un réacteur à plasma contenant un gaz capable d'activer la surface du polymère moulable en rompant des liaisons silicium-carbone ou silicium-oxygène, de manière à former, à la surface dudit polymère, des radicaux libres instables. Dans le cas d'un plasma d'argon, on notera que ce gaz permet de rompre des liaisons chimiques du polymère qui se recombinent ensuite soit dans le réacteur, soit lors de la remise à l'air ambiant avec des atomes d'oxygène de l'air qui captent très facilement ces radicaux libres.

Ce traitement par plasma peut être mis en oeuvre dans le domaine des radiofréquences (typiquement à 13,56 MHz) ou des micro-ondes (typiquement à 233 GHz). De préférence, cette étape de traitement par plasma est mise en oeuvre dans le domaine des radiofréquences.

On notera que ces liaisons hydrogène sont de faible énergie (environ 4,5 kcal/mol) mais sont présentes en nombre beaucoup plus élevé que les liaisons covalentes de plus haute énergie (entre 80 et 120 kcal/mol) caractérisant le procédé précité dudit article pour rendre des compositions de caoutchouc hydrophiles, ce qui procure une adhésion satisfaisante dudit polymère hydrophile audit polymère moulable. De plus, cette adhésion s'effectue spontanément, ce qui signifie que le polymère hydrophile ainsi lié ne subit aucune modification de sa structure chimique, contrairement aux modifications structurelles impliquées par le greffage en présence d'un solvant qui sont inhérentes à l'établissement des liaisons covalentes dans le procédé dudit article.

D'une manière similaire, les Demanderesses ont découvert que si l'on soumet les interfaces paroi-fluide de canaux pour fluides aqueux, canaux tels que ceux d'un système microfluidique et délimités par des parois souples biocompatibles comportant au moins une couche non poreuse de polymère à base d'au moins un polymère moulable hydrophobe, à un traitement pour la formation de groupes oxygénés le long de la chaîne dudit polymère, puis si l'on dépose sur la couche de polymère ainsi traitée une pellicule à base d'au moins un polymère hydrophile qui adhère à cette couche par des liaisons hydrogène, alors on obtient des canaux dont les interfaces paroi-fluide sont beaucoup plus durablement hydrophiles que dans l'art antérieur.

Selon une caractéristique préférentielle de l'Invention relative à un système microfluidique, lesdits canaux peuvent avoir une section circulaire, ovale ou polygonale et présentent chacun une dimension interne allant de 2 µm à 500 µm. On notera que la mouillabilité précitée peut se traduire qualitativement par la capacité d'un fluide aqueux, tel que de l'eau, à circuler dans ces micro-canaux sans formation de bulle d'air (les bulles d'air étant représentatives de zones de mouillabilité insuffisantes).

Selon l'Invention, les canaux des systèmes microfluidiques peuvent être constitués d'une ou plusieurs matières différentes choisies notamment parmi le silicone, le verre, les matériaux thermoplastiques, le silicium, etc... à condition bien entendu que les interfaces paroi-fluide de ces canaux comportent au moins une couche non poreuse de polymère à base d'au moins un polymère moulable hydrophobe tel que défini précédemment.

L'Invention propose également un procédé de fabrication d'un système microfluidique tel que défini précédemment, comprenant les étapes suivantes :
(i) la formation d'un réseau de canaux dans une ébauche dudit système microfluidique qui est constituée d'une composition non poreuse de polymère à base d'au moins un polymère moulable hydrophobe, par exemple en réticulant cette composition dans un micro-moule lorsque ledit polymère est réticulable, puis
(ii) un traitement de surface, par exemple un traitement de surface par plasma, des parois respectives des canaux obtenus en (i) pour l'obtention d'une couche non poreuse de polymère dans laquelle ledit polymère moulable comporte des groupes oxygénés le long de la chaîne, puis
(iii) le dépôt d'une pellicule à base d'au moins un polymère hydrophile sur la couche non poreuse de polymère moulable obtenue en (ii), en formant spontanément des liaisons hydrogène entre des atomes d'hydrogène dudit polymère hydrophile et des atomes d'oxygène présents le long de la chaîne dudit polymère moulable.

On notera que ce procédé selon l'Invention est caractérisé par une simplicité accrue de mise en oeuvre par rapport au procédé objet dudit article et, par conséquent, par un coût de fabrication des systèmes microfluidiques qui est réduit d'une manière significative par rapport à celui de l'art antérieur. En particulier, il convient de noter que ce procédé selon l'Invention est applicable à tous types de polymères synthétiques ou naturels qui présentent un caractère au moins moyennement hydrophile et qui sont capables d'interagir spontanément par contact avec des polymères moulables hydrophobes oxydés, par exemple suite au traitement par plasma.

Il permet par ailleurs d'obtenir des systèmes microfluidiques dans lesquels les interfaces paroi-fluide de parois des canaux sont durablement hydrophiles.

Par couche non poreuse de polymère moulable, on entend d'une manière générale dans la présente description, une couche constituée d'une composition de polymère moulable, ladite composition ayant éventuellement été le siège d'une réticulation, par l'intermédiaire d'un système de réticulation que comprend alors cette composition.

Le ou chaque polymère moulable utilisable dans la composition selon l'Invention est avantageusement choisi parmi les élastomères, les élastomères siliconés tels que par exemple les polyorganosiloxanes (de préférence de grade biomédical) comme le polydiméthylsiloxane (PDMS), et les polymères thermoplastiques tels que le polypropylène, le polyéthylène, les copolymères acrylonitrile - butadiène - styrène (ABS), le polyétherimide, etc....

Parmi ces polymères moulables, les polymères réticulables tels que les élastomères et les élastomères siliconés, sont préférés.

Les polymères de type polyorganosiloxane utilisables selon l'Invention sont de préférence préparés par réticulation à partir d'un système à deux composants qui comprend :
- des oligomères siloxaniques, tels que des diméthylsiloxanes, comportant des groupes vinyle à leurs extrémités de chaîne, et
- un système de réticulation organométallique à base d'un siloxane, tel qu'un méthylhydrosiloxane, et d'un complexe catalytique de platine.

De préférence, le rapport massique (système de réticulation/ polyorganosiloxane) varie de 5 à 15.

On notera que les élastomères siliconés, tel que les PDMS, sont avantageusement associés dans cette composition de type bicomposants à une charge inorganique, telle que des silices fonctionnalisées, ce qui confère à la couche d'élastomère une transparence à la lumière visible et une absence de phénomène d'auto-fluorescence, ce qui est particulièrement recherché dans les systèmes microfluidiques tels que les puces microfluidiques.

La composition de polymère moulable peut comprendre en outre d'autres additifs, pourvu qu'ils soient biocompatibles.

L'étape de dépôt, sur la couche non poreuse de polymère moulable ainsi traitée, d'une pellicule à base d'au moins un polymère hydrophile adhérant à ladite couche par des liaisons hydrogène, est de préférence mise en oeuvre sensiblement dans un délai d'une heure après la fin du traitement par plasma et, à titre encore plus préférentiel, quelques secondes après la fin de ce traitement, du fait de la durabilité des radicaux libres précités qui est typiquement de quelques heures, en particulier pour les élastomères siliconés.

Cette pellicule est susceptible d'être obtenue par dépôt d'une solution aqueuse du polymère hydrophile sur les parois des canaux préalablement traités, pour la formation desdits groupes oxygénés. En d'autres termes, le polymère hydrophile est susceptible d'être lié au polymère moulable par mise en contact d'une solution aqueuse dudit polymère hydrophile avec ledit polymère moulable.

Dans le cas d'une puce microfluidique, on obtient de préférence cette pellicule, en particulier dans le cas de micro-trous et micro-canaux de 50 à 500 µm de dimension interne, par dépôt de gouttes de la solution aqueuse qui s'étalent par effet de capillarité et, dans le cas de canaux fermés de 2 µm à 200 µm de largeur et de 2 µm à 200 µm de hauteur, on injecte cette solution aqueuse à l'aide d'un pousse-seringue.

Après un laps de temps qui est par exemple compris entre 1 et 5 minutes environ et qui est nécessaire à l'étalement de la solution aqueuse le long des parois respectives des trous ou des canaux, on rince à l'eau le microsystème ainsi obtenu puis on le sèche, par exemple par un jet d'azote ou en étuve à une température comprise entre 40 et 50° C environ.

Selon une caractéristique préférentielle de l'Invention, cette solution aqueuse présente une viscosité, mesurée à 25° C selon la technique Brookfield au moyen d'un viscosimètre de type "DIN" équipé d'une aiguille de type "DIN 30D" et pour une vitesse de rotation de 300 à 500 tours / minute, qui est comprise entre 1 et 10 centipoises.

Selon une caractéristique préférentielle de l'Invention relative à des canaux de systèmes microfluidiques, et en particulier de puces microfluidiques de dimension interne allant de 2 µm à 500 µm, ladite pellicule présente une épaisseur inférieure à 1 µm et, à titre encore plus préférentiel, une épaisseur allant de 50 nm à 500 nm.

On notera que cette épaisseur réduite de la pellicule permet de ne pas boucher les micro-canaux et les micro-capillaires des systèmes microfluidiques, et qu'une pellicule plus épaisse (par exemple de l'ordre de plusieurs µm) serait susceptible d'être le siège de craquelures indésirables.

D'une manière générale, on utilise à titre de polymère(s) hydrophile(s) pour la pellicule des canaux selon l'Invention des polymères synthétiques ou naturels de masse moléculaire moyenne en nombre Mn de préférence supérieure à 5 000 g/mol et, à titre encore plus préférentiel, comprise entre 10 000 g/mol et 500 000 g/mol.

Selon un mode de réalisation préférentiel de l'Invention, ledit polymère hydrophile est choisi dans le groupe constitué par les polyvinylpyrrolidones, les alcools polyvinyliques, les polyoxyéthylènes, les polyéthylène glycols, les polypropylène glycols, les copolymères d'acétate de vinyle, les polymères d'acrylamide, les polyacrylates et les polyméthacrylates.

Encore plus préférentiellement, ledit polymère est un homopolymère de vinylpyrrolidone (PVP) qui est présent dans ladite solution aqueuse selon une fraction massique comprise entre 0,5 % et 3 %. On peut par exemple utiliser des PVP commercialisés par la société BASF sous la dénomination "Kollidon K 30" ou bien "Kollidon K 90".

A titre de d'alcool polyvinylique (PVA), on peut par exemple utiliser un PVA commercialisé par la société Hoechst (Clariant) sous la dénomination "Mowiol" et, à titre de polyéthylène glycol, de polypropylène glycol, d'homopolymère et de copolymères d'acrylamide, on peut par exemple utiliser ceux commercialisés par la société Sigma.

A titre de polyacrylates et de polyméthacrylates, on peut par exemple utiliser ceux commercialisés par la société Degussa (Degalan).

Selon un autre mode de réalisation de l'Invention, ledit polymère hydrophile est choisi dans le groupe constitué par les dérivés cellulosiques, les alginates et les polyholosides.

Selon un autre aspect de la présente Invention, un système microfluidique selon l'Invention comporte un réseau de canaux dont l'un au moins ou chacun d'entre eux est tel que défini ci-dessus, i.e. délimité par une paroi souple comportant une couche non poreuse de polymère, à base d'au moins un polymère moulable hydrophobe à groupes oxygénés le long de la chaîne, susceptibles d'être obtenus par un traitement de surface dudit polymère moulable hydrophobe par plasma, et une pellicule à base d'au moins un polymère hydrophile qui recouvre ladite couche à une interface paroi-fluide du canal, ledit polymère hydrophile étant lié audit polymère moulable hydrophobe par des liaisons hydrogène liant des atomes d'hydrogène dudit polymère hydrophile à des groupes oxygénés présents le long de la chaîne dudit polymère moulable hydrophobe, de telle sorte que les parois de ces canaux soient durablement hydrophiles.

Ainsi, les systèmes microfluidiques conformes à l'Invention sont des dispositifs miniaturisés incorporant des systèmes de canaux durablement hydrophiles et de dimensions micrométriques qui peuvent notamment se présenter sous la forme :
- de puces microfluidiques utilisables en particulier pour des applications biologiques, médicales pharmacologiques, cosmétiques, génomiques, etc... ;
- de puces à cellules et en particulier de puces à cellules vivantes.

Les caractéristiques précitées de la présente Invention, ainsi que d'autres, seront mieux comprises à la lecture de la description suivante de plusieurs exemples de réalisation de l'Invention, donnés à titre illustratif et non limitatif, ladite description étant réalisée en relation avec les dessins joints, parmi lesquels :
La figure 1 est un graphique illustrant l'évolution de la mouillabilité par l'eau d'échantillons lisses "témoin" et selon l'Invention, en fonction de la durée de leur exposition à l'air ambiant,
La figure 2 est un graphique illustrant l'évolution de la mouillabilité par l'eau d'échantillons lisses "témoin" et selon l'Invention, en fonction de la durée de leur trempage antérieur dans de l'eau,
La figure 3 est un graphique illustrant l'évolution de la mouillabilité par l'eau des échantillons utilisés pour la figure 2, en fonction de la température caractérisant leur séjour en chaleur sèche, et
La figure 4 est un graphique illustrant l'évolution de la mouillabilité par l'eau des échantillons utilisés pour les figures 2 et 3, en fonction du nombre de cycles caractérisant leur séjour en chaleur humide.

Dans les exemples qui suivent, on a procédé à des mesures de mouillage de parois par la méthode dite de la goutte d'eau, bien connue de l'homme du métier. Cette méthode consiste essentiellement à déposer une goutte d'eau sur la surface de la paroi à tester au moyen d'une micro-seringue et avec une caméra de prise de vue, à mesurer à l'aide d'un goniomètre automatique l'angle de contact entre la base de la goutte sur la surface et la tangente extérieure à cette surface. De manière connue, une surface est considérée comme hydrophobe si l'angle de contact mesuré est supérieur à 90°, et hydrophile si cet angle de contact est inférieur à 90°.

### EXEMPLE 1 : Essais de mouillabilité par l'eau d'échantillons lisses

On a utilisé pour l'ensemble de ces essais, des échantillons constitués d'une composition non poreuse d'élastomère réticulé de type à deux composants, comprenant un PDMS de grade biomédical associé à un système de réticulation organométallique, selon un rapport massique de mélangeage (système de réticulation/ PDMS) égal à 10.

Chacun des échantillons présente une épaisseur allant de 1 à 3 mm et une surface lisse de superficie S environ égale à 2 cm².

### 1) Première série d'essais "témoin" et selon l'Invention:

On a utilisé des échantillons initialement constitués d'une composition de PDMS commercialisée par Dow Corning sous la dénomination Sylgard RTV 184, et l'on a soumis à des tests de mouillage selon la méthode précitée de mesure d'angle de contact d'une goutte d'eau:
   - une paire d'échantillons "témoin" T0 non traités (i.e. dont l'interface avec l'eau est constituée de la composition de PDMS initiale),
   - quatre paires d'échantillons "témoin" T1 à T4 traités par un plasma d'argon ou d'oxygène dans un réacteur de 20 litres de capacité et à émetteur de type capacitif émettant à 13,56 MHz, à une même puissance de radiofréquences de 50 W et pendant des durées de 5 et 10 min. pour chacun des deux plasmas (argon ou oxygène), et
   - quatre paires d'échantillons selon l'Invention I1 à I4 respectivement obtenus par trempage pendant quelques secondes dans une solution aqueuse à 1 % d'un PVP (commercialisé par BASF sous la dénomination "Kollidon K 90") des échantillons T1 à T4 quelques instants après leur obtention, puis par séchage à l'étuve à 45° C des échantillons ainsi revêtus d'une pellicule à base de PVP, laquelle présente une épaisseur de 100 nm environ.

Le tableau I ci-après expose les résultats d'angles de contact moyens obtenus à un instant t₀ immédiatement consécutif à l'obtention des échantillons, à un instant t₁ correspondant à une exposition des échantillons pendant 2 heures à l'air ambiant et à un instant t₂ correspondant à une exposition des échantillons pendant 4 jours à l'air ambiant.

**Tableau I :**

| **Echantillons** | **Traitement plasma (50 W)** | **Trempage solution aqueuse PVP** | **Angles de contact moyens (degrés) des gouttes d'eau** | | |
|---|---|---|---|---|---|
| | | | **t₀ = 0** | **t₁ = 2 h** | **t₂ = 4 j** |
| **T0** | néant | néant | 113 | 113 | 113 |
| **T1** | Argon 5 min. | néant | 30,4 | 46,8 | 97 |
| **T2** | Argon 10 min. | néant | 41,1 | 51,2 | 101 |
| **T3** | Oxygène 5 min. | néant | 22,7 | 35 | 86 |
| **T4** | Oxygène 10 min. | néant | 27,3 | 45,2 | 92 |
| **I1** | Argon 5 min. | oui | 24,9 | 37 | 48 |
| **I2** | Argon 10 min. | oui | 37,8 | 44,5 | 51,8 |
| **I3** | Oxygène 5 min. | oui | 27,3 | 25,9 | 23,1 |
| **I4** | Oxygène 10 min. | oui | 23,7 | 23,8 | 22,4 |

Ce tableau I montre que les traitements par plasma d'argon ou d'oxygène ne confèrent aux échantillons "témoin" T1 à T4 qu'un état hydrophile momentané qui diminue sensiblement au bout de 2 heures (voir par exemple les angles de contact de 46,8° et 51,2° obtenus pour les paires d'échantillons T1 et T2 respectivement, uniquement soumis à un traitement de surface par plasma d'argon pendant 5 ou 10 minutes) et cesse pratiquement au bout de 4 jours, comme cela est illustré par les angles de contact moyen de 97° et 101° qui caractérisent respectivement la mouillabilité à l'eau de la paire d'échantillons T1 et T2 après 4 jours, et qui sont très proches de la valeur de 113° représentative du caractère hydrophobe de la paire d'échantillons T0 à base de PDMS non traité.

Ce tableau I montre au contraire que le dépôt d'une pellicule hydrophile consécutivement à l'un ou l'autre des traitements de surface par plasma d'argon ou d'oxygène confère aux échantillons selon l'Invention I1 à I4 un caractère hydrophile durable, qui est très bien conservé au terme de 4 jours (voir les angles de contact très inférieurs à 90° obtenus pour les échantillons I1 à 14 conformes à l'Invention).

### 2) Seconde série d'essais "témoin" et selon l'Invention:

Le but de ces essais a été de quantifier la durabilité du dépôt de la pellicule selon l'Invention, qui traduit la solidité des liaisons hydrogène entre les atomes d'hydrogène du PVP (choisi à titre de polymère hydrophile) et les atomes d'oxygène du PDMS ayant des groupes oxygénés le long de la chaîne, suite à son traitement par plasma.

A cet effet, on a utilisé des échantillons initialement constitués d'une composition de PDMS réticulé commercialisée par la société Dow Corning sous la dénomination Sylgard RTV 184., et l'on a soumis à des tests de mouillage selon la méthode précitée de mesure de l'angle de contact d'une goutte d'eau :
- un échantillon "témoin" T0' non traité (i.e. dont l'interface avec l'eau est constituée de la composition de caoutchouc initiale),
- un échantillon "témoin" T1' traité par un plasma d'oxygène dans un réacteur cylindrique "Branson IPC" d'environ 20 litres, pourvu d'un émetteur capacitif émettant à 13,56 MHz à une puissance de radiofréquences comprise entre 20 et 50 W et pendant une durée comprise entre 2 et 10 min., étant précisé qu'après mise sous vide à un niveau primaire compris entre 1 et 10 Pa, le plasma de traitement à base d'oxygène est émis pour l'obtention d'un niveau de vide compris entre 3 et 15 Pa, et
- un échantillon selon l'Invention I1' obtenu par trempage pendant quelques secondes de l'échantillon "témoin" T1', quelques instants après son obtention, dans une solution aqueuse à 1 % du PVP de dénomination "Kollidon K 90", puis par séchage à l'étuve à 45°C de l'échantillon revêtu de cette pellicule à base de PVP.

### a) Evolution de la mouillabilité à l'air ambiant :

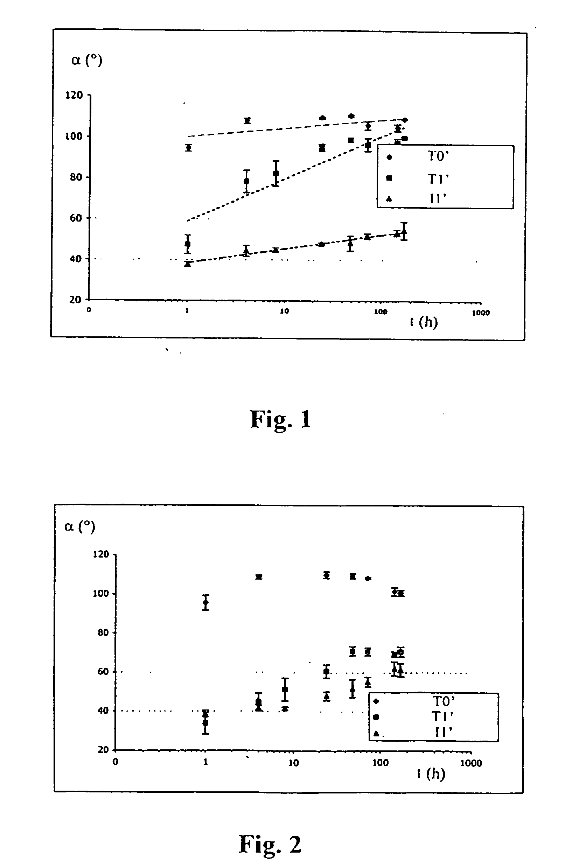

La figure 1 illustre en échelle semi-logarithmique l'évolution de l'angle de contact α (en degrés) de gouttes d'eau en contact avec les surfaces lisses des échantillons T0', T1' et I1', en fonction de la durée d'exposition t (en heures) à l'air ambiant de ces échantillons.

Cette figure 1 montre que, au vu des interpolations logarithmiques visibles en pointillés, le caractère hydrophile de l'échantillon selon l'Invention I1' est beaucoup plus durable que celui de l'échantillon T1' traité uniquement par plasma, qui est seulement momentané et cesse au bout d'un jour (angle de contact supérieur à 90° pour T1' au bout de 24 heures). En effet, il apparaît que le caractère hydrophile de l'échantillon I1' est non seulement sensiblement intact après 8 jours d'exposition à l'air ambiant mais, par extrapolation, peut être considéré comme toujours présent après 10 000 heures d'une telle exposition (soit plus d'un an) avec un angle de contact de 66° et même après 100 000 heures (soit plus de 11 ans) avec un angle de contact de 72°, angles qui sont nettement inférieurs à la limite d'hydrophobie reconnue de 90°.

On notera que cette augmentation extrêmement lente de l'angle de contact avec le temps qui caractérise l'échantillon I1' selon l'Invention témoigne d'une diminution également très lente de l'énergie de surface de cet échantillon (inversement proportionnelle à l'angle de contact) et, par conséquent, de la stabilité de l'adhésion de la pellicule de PVP à la couche à base de PDMS, par l'intermédiaire des liaisons hydrogène reliant le PVP au PDMS oxydé.

### b) Evolution de la mouillabilité après trempage dans de l'eau :

La figure 2 illustre en échelle semi-logarithmique l'évolution de l'angle de contact α (en degrés) de gouttes d'eau en contact avec les surfaces lisses des échantillons T0', T1' et I1', en fonction de la durée t (en heures) de trempage de ces échantillons dans de l'eau distillée.

Cette figure 2 montre que le caractère hydrophile de l'échantillon selon l'Invention I1' est également durable suite à un trempage dans de l'eau pendant plusieurs jours (voir les valeurs d'angle de contact pour I1' inférieures à 60° après 100 heures de trempage, soit plus de 4 jours), et que ce caractère hydrophile de l'échantillon I1' diminue moins rapidement dans le temps suite à un trempage pendant ces 100 heures que celui de l'échantillon T1' traité uniquement par plasma.

### c) Evolution de la mouillabilité après séjour en chaleur sèche :

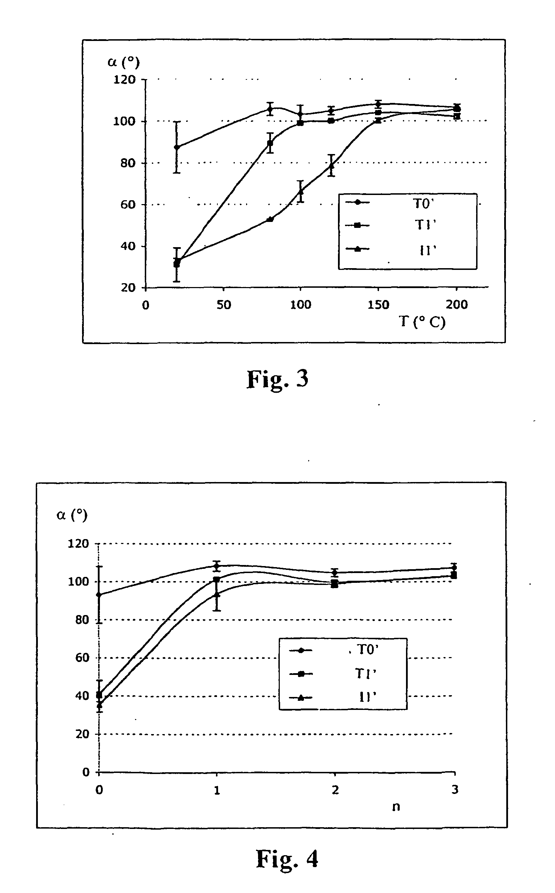

La figure 3 illustre l'évolution de l'angle de contact α (en degrés) de gouttes d'eau en contact avec les surfaces lisses des échantillons T0', T1' .et I1', en fonction de la température T (en ° C) de conservation de ces échantillons régnant dans un four à chaleur sèche et à air circulant. On a soumis les échantillons à une pluralité de cycles de chauffage- refroidissement, en augmentant progressivement la température de chauffage du four de 20° C à 200° C puis, pour chaque température de chauffage considérée, en mesurant l'angle de contact d'une goutte d'eau à la température ambiante après avoir extrait l'échantillon du four pour le refroidir.

Cette figure 3 montre notamment que le caractère hydrophile de l'échantillon selon l'Invention I1' diminue moins rapidement avec l'augmentation de la température de chauffage que celui de l'échantillon T1' traité uniquement par plasma, celui-ci étant pratiquement conservé même après un séjour à une température de 120° C (correspondant à un angle de contact nettement inférieur à la limite de 90°) contrairement à l'échantillon T1' qui devient hydrophobe à une température d'environ 80° C.

### d) Evolution de la mouillabilité en chaleur humide:

La figure 4 illustre l'évolution de l'angle de contact α (en degrés) de gouttes d'eau en contact avec les surfaces lisses des échantillons T0', T1' et I1', en fonction d'un nombre de cycles de mise en chaleur humide en autoclave à 120° C pour la mesure des angles de contact à la température ambiante.

Cette figure 4 montre également que le caractère hydrophile de l'échantillon selon l'invention I1' diminue moins rapidement avec le nombre de cycles en autoclave que celui de l'échantillon T1' traité par plasma.

### e) Conclusion:

L'adhésion de la pellicule hydrophile selon l'Invention à la couche à base de caoutchouc silicone oxydé est suffisamment forte du fait des liaisons hydrogène précitées, pour conférer à une paroi de canal à base de ce caoutchouc silicone et de cette pellicule une mouillabilité satisfaisante et durable vis-à-vis de fluides aqueux, à une température inférieure ou égale à 120° C. Il en résulte que le procédé selon l'Invention pour rendre une paroi de canal hydrophile est bien adapté pour la fabrication de systèmes microfluidiques, en particulier de puces microfluidiques.

### EXEMPLE 2: Fabrication d'un système microfluidique selon l'Invention et caractère durablement hydrophile obtenu

### 1) Fabrication d'un système microfluidique

Dans un premier temps, on a réticulé dans un micro-moule tridimensionnel à base d'une résine commercialisée par la société Microchem sous la dénomination "SU-8", la composition à base de PDMS commercialisée par la société Dow Corning sous la dénomination "Sylgard RTV 184", pour obtenir par cuisson à 70° C une ébauche réticulée du système microfluidique comportant un réseau de micro-canaux. Après 2 heures, on a découpé le PDMS et on l'a enlevé du moule pour le stocker sur une lame de verre.

Dans un second temps, on a soumis les canaux de cette ébauche à un traitement d'activation par plasma de la surface du PDMS, pour la formation de groupes oxygénés le long de la chaîne du PDMS et le collage ultérieur de la zone "microstructurée" de l'ébauche (i.e. où est formé le réseau de canaux) sur un substrat de type silice, verre ou PDMS.

Le réacteur à plasma utilisé (d'un volume d'environ 60 litres) est commercialisé par la société VAS sous la dénomination "RIE 300", et il comporte un émetteur de type capacitif à 13,56 MHz. On a placé l'ébauche du microsystème dans le bâti du réacteur de telle manière que la zone "microstructurée" ainsi que le substrat soient tournés vers le haut. Après la réalisation d'un vide secondaire de 2.10⁻⁶ mbar, on a émis les gaz réactifs (plasmas d'oxygène ou d'argon, au choix) pour l'obtention d'une pression de traitement de 0,2 mbar. La puissance des radio-fréquences émises est comprise entre 30 et 40 W pour une durée de traitement de 20 à 30 secondes.

Après la remise à l'air ambiant, on a mis en contact l'une sur l'autre ladite zone "microstructurée" de l'ébauche traitée et la face du substrat exposée au plasma, et on les a maintenues ainsi pendant quelques secondes, pour l'obtention du collage de cette zone de l'ébauche sur le substrat.

Dans un troisième temps, on a procédé au dépôt de la pellicule hydrophile sur l'ébauche ainsi traitée, dans l'heure qui a suivi ce traitement par plasma. On a injecté à cet effet dans les canaux des gouttes de la solution aqueuse à 0,2 % du PVP vendu sous la dénomination commerciale Kollidon® K 90, de la manière suivante :
- pour des micro-trous et des micro-canaux de 50 µm à 500 µm de dimension interne, on a déposé sur la zone "microstructurée" des gouttes de cette solution aqueuse qui s'étalent par effet de capillarité. Après 1 à 5 minutes, on a rincé à l'eau distillée le microsystème obtenu puis on l'a séché soit par un jet d'azote, soit à 50° C en étuve ;
- pour des canaux fermés de 2 µm à 200 µm de largeur et de 2 µm à 200 µm de hauteur, on a injecté cette solution aqueuse à l'aide d'un pousse-seringue de type "Harvard Instruments". On a programmé à cet effet le débit de 10 à 30 µl/min. pour un total de 50 à 100 µl de solution. On a ensuite rincé à l'eau distillée le microsystème obtenu, puis on l'a séché à 50°C en étuve.

### 2) Essais de mouillabilité à l'eau réalisés sur ce système

On a pu vérifier que lorsque l'on dépose de l'eau sur ce microsystème pour son aspiration par capillarité dans les canaux, on observe dans ces derniers un ménisque de forme concave et une absence de bulle d'air, ce qui témoigne du caractère très hydrophile des parois des canaux, et que cette caractéristique est avantageusement conservée plusieurs mois après la fabrication de ce microsystème.

## Revendications

1. Composition de polymère non poreuse à base d'au moins un polymère moulable hydrophobe ayant des groupes oxygénés le long de la chaîne, modifié en surface par au moins un polymère hydrophile, **caractérisée en ce que** ledit polymère hydrophile est lié audit polymère moulable hydrophobe par des liaisons hydrogène liant des atomes d'hydrogène dudit polymère hydrophile à des groupes oxygénés présents le long de la chaîne dudit polymère moulable hydrophobe, de telle sorte que ladite composition de polymère soit hydrophile en surface pendant une durée supérieure à 3 semaines.

2. Composition selon la revendication 1, **caractérisée en ce que** ledit polymère hydrophile est susceptible d'être lié audit polymère moulable hydrophobe par mise en contact d'une solution aqueuse dudit polymère hydrophile avec ledit polymère moulable.

3. Composition selon la revendication 1 ou 2, **caractérisée en ce que** ledit polymère hydrophile présente une masse moléculaire moyenne en nombre Mn supérieure à 5 000 g/mol.

4. Composition selon la revendication 3, **caractérisée en ce que** ledit polymère hydrophile présente une masse moléculaire moyenne en nombre Mn comprise entre 10 000 g/mol et 500 000 g/mol.

5. Composition selon l'une des revendications 1 à 4, **caractérisée en ce que** ledit polymère est choisi dans le groupe constitué par les polyvinylpyrrolidones, les polymères d'alcool vinylique, les polyoxyéthylènes, les polyéthylèneglycols, les polypropylèneglycols, les copolymères d'acétate de vinyle, les polymères d'acrylamide, les polyacrylates et les polyméthacrylates.

6. Composition de caoutchouc selon l'une des revendications 1 à 4, **caractérisée en ce que** ledit polymère hydrophile est choisi dans le groupe constitué par les dérivés cellulosiques, les alginates et les polyholosides.

7. Composition selon la revendication 1, **caractérisée en ce que** lesdits groupes oxygénés sont susceptibles d'être obtenus par un traitement de surface par plasma dudit polymère moulable.

8. Composition selon l'une des revendications précédentes, **caractérisée en ce que** ledit polymère moulable hydrophobe est choisi parmi les élastomères, les élastomères siliconés et les polymères thermoplastiques.

9. Composition selon la revendication 8, **caractérisée en ce que** ledit polymère moulable hydrophobe est choisi parmi les polyorganosiloxanes, le polypropylène, le polyéthylène, les copolymères acrylonitrile - butadiène - styrène, et le polyétherimide.

10. Canal pour fluides aqueux délimité par une paroi souple comportant une couche non poreuse de polymère, à base d'au moins un polymère moulable hydrophobe ayant des groupes oxygénés le long de la chaîne, modifié en surface par au moins un polymère hydrophile qui recouvre ladite couche à une interface paroi-fluide dudit canal, **caractérisé en ce que** ledit polymère hydrophile est lié audit polymère moulable hydrophobe par des liaisons hydrogène liant des atomes d'hydrogène dudit polymère hydrophile à des groupes oxygénés présents le long de la chaîne dudit polymère moulable hydrophobe, de telle sorte que ladite interface soit hydrophile pendant une durée supérieure à 3 semaines.

11. Canal selon la revendication 10, **caractérisé en ce que** ladite pellicule est susceptible d'être obtenue par dépôt d'une solution aqueuse dudit polymère hydrophile.

12. Canal selon la revendication 10 ou 11, **caractérisé en ce que** ledit polymère hydrophile présente une masse moléculaire moyenne en nombre Mn supérieure à 5 000 g/mol.

13. Canal selon la revendication 12, **caractérisé en ce que** ledit polymère hydrophile présente une masse moléculaire moyenne en nombre Mn comprise entre 10 000 g/mol et 500 000 g/mol.

14. Canal selon l'une des revendications 10 à 13, **caractérisé en ce que** ledit polymère hydrophile est choisi dans le groupe constitué par les polyvinylpyrrolidones, les polymères d'alcool vinylique, les polyoxyéthylènes, les polyéthylèneglycols, les polypropylèneglycols, les copolymères d'acétate de vinyle, les polymères d'acrylamide, les polyacrylates et les polyméthacrylates.

15. Canal selon l'une des revendications 10 à 13, **caractérisé en ce que** ledit polymère hydrophile est choisi dans le groupe constitué par les dérivés cellulosiques, les alginates et les polyholosides.

16. Canal selon l'une des revendications 10 à 15, **caractérisé en ce qu'**il présente une dimension interne allant de 2 µm à 500 µm, ledit canal étant utilisable dans un système microfluidique.

17. Canal selon la revendication 16, **caractérisé en ce que** ladite pellicule présente une épaisseur inférieure à 1 µm.

18. Canal selon la revendication 17, **caractérisé en ce que** lesdits groupes oxygénés sont susceptibles d'être obtenus par un traitement de surface par plasma dudit polymère moulable.

19. Canal selon l'une des revendications 10 à 18, **caractérisé en ce que** ledit polymère moulable hydrophobe est choisi parmi les élastomères, les élastomères siliconés et les polymères thermoplastiques.

20. Canal selon la revendication 19, **caractérisé en ce que** ledit polymère moulable hydrophobe est choisi parmi les polyorganosiloxanes, le polypropylène, le polyéthylène, les copolymères acrylonitrile - butadiène - styrène, et le polyétherimide.

21. Système microfluidique, **caractérisé en ce qu'**il comporte un réseau de canaux biocompatibles dont l'un au moins ou chacun d'entre eux est tel que défini à l'une quelconque des revendications 10 à 20.

22. Système microfluidique selon la revendication 21, **caractérisé en ce qu'**il se présente sous la forme d'une puce microfluidique ou d'une puce à cellules.

23. Procédé de fabrication d'un système microfluidique tel que défini à la revendication 21, comprenant les étapes suivantes :
(i) la formation d'un réseau de canaux dans une ébauche dudit système microfluidique qui est constituée d'une composition de polymère non poreuse à base d'au moins un polymère moulable hydrophobe, puis
(ii) un traitement de surface des parois respectives des canaux obtenus en (i) pour l'obtention d'une couche non poreuse de polymère dans laquelle ledit polymère moulable comporte des groupes oxygénés le long de la chaîne, puis
**caractérisé en ce qu'**il comprend en outre l'étape suivante :
(iii) le dépôt d'une pellicule à base d'au moins un polymère hydrophile sur la couche non poreuse de polymère moulable obtenue en (ii), en formant spontanément des liaisons hydrogène entre des atomes d'hydrogène dudit polymère hydrophile et des atomes d'oxygène présents le long de la chaîne dudit polymère moulable.

24. Procédé de fabrication selon la revendication 23, **caractérisé en ce que** l'étape (iii) est mise en oeuvre par mise en contact d'une solution aqueuse dudit polymère hydrophile sur les parois obtenues en (ii).

25. Procédé de fabrication selon la revendication 23 ou 24, **caractérisé en ce que** l'étape (ii) est mise en oeuvre par un traitement par plasma.

## Claims

1. Composition of non-porous polymer based on at least one mouldable hydrophobic polymer having oxygen-containing groups along the chain, surface-modified with at least one hydrophilic polymer, **characterised in that** the said hydrophilic polymer is bound to the said mouldable hydrophobic polymer by hydrogen bonds binding hydrogen atoms of the said hydrophilic polymer to oxygen-containing groups present along the chain of the said mouldable hydrophobic polymer, in such a manner that the said composition of polymer is hydrophilic on the surface for a period greater than 3 weeks.

2. Composition according to Claim 1, **characterised in that** the said hydrophilic polymer is capable of being bound to the said mouldable hydrophobic polymer by contacting an aqueous solution of the said hydrophilic polymer with the said mouldable polymer.

3. Composition according to Claim 1 or 2, **characterised in that** the said hydrophilic polymer exhibits a number average molecular weight Mn greater than 5,000 g/mol.

4. Composition according to Claim 3, **characterised in that** the said hydrophilic polymer exhibits a number average molecular weight Mn between 10,000 g/mol and 500,000 g/mol.

5. Composition according to one of Claims 1 to 4, **characterised in that** the said polymer is selected from the group made up of polyvinylpyrrolidones, polymers of vinyl alcohol, polyoxyethylenes, polyethylene glycols, polypropylene glycols, copolymers of vinyl acetate, polymers of acrylamide, polyacrylates and polymethacrylates.

6. Rubber composition according to one of Claims 1 to 4, **characterised in that** the said hydrophilic polymer is selected from the group made up of cellulose derivatives, alginates and polysaccharides.

7. Composition according to Claim 1, **characterised in that** the said oxygen-containing groups can be obtained by a surface treatment of the said mouldable polymer with plasma.

8. Composition according to one of the previous claims, **characterised in that** the said mouldable hydrophobic polymer is selected from the elastomers, silicon-containing elastomers and thermoplastic polymers.

9. Composition according to Claim 8, **characterised in that** the said mouldable hydrophobic polymer is selected from the polyorganosiloxanes, polypropylene, polyethylene, acrylonitrile - butadiene - styrene copolymers and polyetherimide.

10. Channel for aqueous fluids bounded by a flexible wall comprising a non-porous layer of polymer, based on at least one mouldable hydrophobic polymer having oxygen-containing groups along the chain, surface-modified with at least one hydrophilic polymer which covers the said layer at a wall-fluid interface of the said channel, **characterised in that** the said hydrophilic polymer is bound to the said mouldable hydrophobic polymer by hydrogen bonds binding hydrogen atoms of the said hydrophilic polymer to oxygen-containing groups present along the chain of the said mouldable hydrophobic polymer, in such a manner that the said interface is hydrophilic for a period greater than 3 weeks.

11. Channel according to Claim 10, **characterised in that** the said film can be obtained by deposition of an aqueous solution of the said hydrophilic polymer.

12. Channel according to Claim 10 or 11, **characterised in that** the said hydrophilic polymer exhibits a number average molecular weight Mn greater than 5,000 g/mol.

13. Channel according to Claim 12, **characterised in that** the said hydrophilic polymer exhibits a number average molecular weight Mn between 10,000 g/mol and 500,000 g/mol.

14. Channel according to one of Claims 10 to 13, **characterised in that** the said hydrophilic polymer is selected from the group made up of polyvinylpyrrolidones, polymers of vinyl alcohol, polyoxyethylenes, polyethylene glycols, polypropylene glycols, copolymers of vinyl acetate, polymers of acrylamide, polyacrylates and polymethacrylates.

15. Channel according to one of Claims 10 to 13, **characterised in that** the said hydrophilic polymer is selected from the group made up of cellulose derivatives, alginates and polysaccharides.

16. Channel according to one of Claims 10 to 15, **characterised in that** it exhibits an internal dimension ranging from 2 µm to 500 µm, the said channel being usable in a microfluidic system.

17. Channel according to Claim 16, **characterised in that** the said film exhibits a thickness less than 1 µm.

18. Channel according to Claim 17, **characterised in that** the said oxygen-containing groups can be obtained by a surface treatment of the said mouldable polymer with plasma.

19. Channel according to one of Claims 10 to 18, **characterised in that** the said mouldable hydrophobic polymer is selected from the elastomers, silicon-containing elastomers and thermoplastic polymers.

20. Channel according to Claim 19, **characterised in that** the said mouldable hydrophobic polymer is selected from the polyorganosiloxanes, polypropylene, polyethylene, acrylonitrile - butadiene - styrene copolymers and polyetherimide.

21. Microfluidic system, **characterised in that** it comprises a network of bio-compatible channels at least one or each of which is as defined in any one of Claims 10 to 20.

22. Microfluidic system according to Claim 21, **characterised in that** it takes the form of a microfluidic chip or a cellular chip.

23. Process for manufacture of a microfluidic system as defined in Claim 21, comprising the following stages:
(i) the formation of a network of channels in an outline of the said microfluidic system which is made up of a composition of non-porous polymer based on at least one mouldable hydrophobic polymer, then
(ii) a surface treatment of the surface of the respective walls of the channels obtained in (i) for the obtention of a non-porous layer of polymer wherein the said mouldable polymer contains oxygen-containing groups along the chain,then
**characterised in that** it further contains the following stage:
(iii) the deposition of a film based on at least one hydrophilic polymer on the non-porous layer of mouldable polymer obtained in (ii), spontaneously forming hydrogen bonds between hydrogen atoms of the said hydrophilic polymer and oxygen atoms present along the chain of the said mouldable polymer.

24. Manufacturing process according to Claim 23, **characterised in that** the stage (iii) is implemented by contacting an aqueous solution of the said hydrophilic polymer onto the walls obtained in (ii).

25. Manufacturing process according to Claim 23 or 24, **characterised in that** the stage (ii) is implemented by a treatment with plasma.

## Patentansprüche

1. Nichtporöse Polymer-Zusammensetzung auf der Basis von mindestens einem hydrophoben formbaren Polymer mit oxygenierten Gruppen entlang der Kette, das durch mindestens ein hydrophiles Polymer oberflächenmodifiziert ist, **dadurch gekennzeichnet, dass** das hydrophile Polymer mit dem hydrophoben formbaren Polymer über Wasserstoffbindungen der Wasserstoffatome des hydrophilen Polymers mit den oxygenierten Gruppen, die entlang der Kette des hydrophoben formbaren Polymers vorhanden sind, so verbunden ist, dass die Polymer-Zusammensetzung an der Oberfläche während einer Dauer von mehr als 3 Wochen hydrophil ist.

2. Zusammensetzung nach Anspruch 1, **dadurch gekennzeichnet, dass** das hydrophile Polymer mit dem hydrophoben formbaren Polymer durch Inkontaktbringen einer wässrigen Lösung des hydrophilen Polymers mit dem hydrophoben Polymer gebunden werden kann.

3. Zusammensetzung nach Anspruch 1 oder 2, **dadurch gekennzeichnet, dass** das hydrophile Polymer ein zahlengemitteltes Molekulargewicht Mn über 5000 g/mol aufweist.

4. Zusammensetzung nach Anspruch 3, **dadurch gekennzeichnet, dass** hydrophile Polymer ein zahlengemitteltes Molekulargewicht Mn zwischen 10000 g/mol und 500 000 g/mol aufweist.

5. Zusammensetzung nach einem der Ansprüche 1 bis 4, **dadurch gekennzeichnet, dass** das Polymer aus der Gruppe bestehend aus Polyvinylpyrrolidonen, Polyvinylalkohol-Polymeren, Polyoxyethylenen, Polyethylenglykolen, Polypropylenglykolen, Vinylacetat-Copolymerisaten, Acrylamid-Polymeren, Polyacrylaten und Polymethacrylaten ausgewählt wird.

6. Kautschukzusammensetzung nach einem der Ansprüche 1 bis 4, **dadurch gekennzeichnet, dass** das hydrophile Polymer aus der Gruppe bestehend aus Zellulosederivaten, Alginaten und Polyholosiden ausgewählt wird.

7. Zusammensetzung nach Anspruch 1, **dadurch gekennzeichnet, dass** die oxygenierten Gruppen durch eine Oberflächen-Plasmabehandlung des formbaren Polymers erhalten werden können.

8. Zusammensetzung nach einem der vorhergehenden Ansprüche, **dadurch gekennzeichnet, dass** das hydrophobe formbare Polymer aus Elastomeren, Silikon-Elastomeren und thermoplastischen Polymeren ausgewählt wird.

9. Zusammensetzung nach Anspruch 8, **dadurch gekennzeichnet, dass** das hydrophobe formbare Polymer aus Polyorganosiloxanen, Polypropylen, Polyethylen, Acrylnitril/Butadien/Styrol-Copolymeren und Polyetherimid ausgewählt wird.

10. Kanal für wässrige Flüssigkeiten, der durch eine flexible Wand begrenzt ist, die eine nichtporöse Polymerschicht auf der Basis von mindestens einem hydrophoben formbaren Polymer mit oxygenierten Gruppen entlang der Kette aufweist, das durch mindestens ein hydrophiles Polymer, das die Schicht an einer Grenzfläche Wand-Flüssigkeit des Kanals abdeckt, oberflächenmodifiziert ist, **dadurch gekennzeichnet, dass** das hydrophile Polymer mit dem hydrophoben formbaren Polymer über Wasserstoffbindungen der Wasserstoffatome des hydrophilen Polymers mit den oxygenierten Gruppen, welche entlang der Kette des hydrophoben formbaren Polymers vorhanden sind, so verbunden ist, dass die Grenzfläche während einer Dauer von mehr als 3 Wochen hydrophil ist.

11. Kanal nach Anspruch 10, **dadurch gekennzeichnet, dass** der Film durch Abscheiden einer wässrigen Lösung des hydrophilen Polymers erhalten werden kann.

12. Kanal nach Anspruch 10 oder 11, **dadurch gekennzeichnet, dass** das hydrophile Polymer ein zahlengemitteltes Molekulargewicht Mn über 5000 g/mol aufweist.

13. Kanal nach Anspruch 12, **dadurch gekennzeichnet, dass** das hydrophile Polymer ein zahlengemitteltes Molekulargewicht Mn zwischen 10.000 g/mol und 500.000 g/mol aufweist.

14. Kanal nach einem der Ansprüche 10 bis 13, **dadurch gekennzeichnet, dass** das hydrophile Polymer aus der Gruppe bestehend aus Polyvinylpyrrolidonen, Polyvinylalkohol-Polymeren, Polyoxyethylenen, Polyethylenglykolen, Polypropylenglykolen, Vinylacetat-Copolymerisaten, Acrylamid-Polymeren, Polyacrylaten und Polymethacrylaten ausgewählt wird.

15. Kanal nach einem der Ansprüche 10 bis 13, **dadurch gekennzeichnet, dass** das hydrophile Polymer aus der Gruppe bestehend aus Zellulosederivaten, Alginaten und Polyholosiden ausgewählt wird.

16. Kanal nach einem der Ansprüche 10 bis 15, **dadurch gekennzeichnet, dass** er eine Innenabmessung zwischen 2 µm und 500 µm aufweist, wobei der Kanal in einem mikrofluidischen System verwendbar ist.

17. Kanal nach Anspruch 16, **dadurch gekennzeichnet, dass** der Film eine Dicke unter 1 µm aufweist.

18. Kanal nach Anspruch 17, **dadurch gekennzeichnet, dass** die oxygenierten Gruppen durch eine Oberflächen-Plasmabehandlung des formbaren Polymers erhalten werden können.

19. Kanal nach einem der Ansprüche 10 bis 18, **dadurch gekennzeichnet, dass** das hydrophobe formbare Polymer aus Elastomeren, Silikonelastomeren und thermoplastischen Polymeren ausgewählt wird.

20. Kanal nach Anspruch 19, **dadurch gekennzeichnet, dass** das hydrophobe formbare Polymer aus Polyorganosiloxanen, Polypropylen, Polyethylen, Acrylnitril/Butadien/Styrol-Copolymeren und Polyetherimid ausgewählt wird.

21. Mikrofluidik-System, **dadurch gekennzeichnet, dass** es ein Netz von biokompatiblen Kanälen aufweist, von denen mindestens eins oder jedes von ihnen gemäß einem der Ansprüche 10 bis 20 definiert ist.

22. Mikrofluidik-System nach Anspruch 21, **dadurch gekennzeichnet, dass** es die Form eines Mikrofluidik-Chips oder eines Zellenchips aufweist.

23. Verfahren zur Herstellung eines Mikrofluidik-Systems nach Anspruch 21 definiert, mit folgenden Schritten:
(i) Bildung eines Kanalnetzes in einem Rohling des Mikrofluidik-Systems, das aus einer nichtporösen Polymer-Zusammensetzung auf der Basis von mindestens einem hydrophoben formbaren Polymer besteht, anschließend
(ii) Behandlung der Oberfläche der jeweiligen Wände der im Schritt (i) erhaltenen Kanäle, um eine nichtporöse Polymerschicht zu erhalten, in welcher das formbare Polymer oxygenierte Gruppen entlang der Kette enthält, anschließend
**dadurch gekennzeichnet, dass** es zudem folgenden Schritt umfasst:
(iii) Abscheiden eines Films auf der Basis mindestens eines hydrophilen Polymers auf der im Schritt (ii) erhaltenen nichtporösen Schicht des formbaren Polymers, wobei spontan Wasserstoffbindungen zwischen den Wasserstoffatomen des hydrophilen Polymers und den entlang der Kette des formbaren Polymers vorhandenen Sauerstoffatomen gebildet werden.

24. Herstellungsverfahren nach Anspruch 23, **dadurch gekennzeichnet, dass** der Schritt (iii) durch Inkontaktbringen einer wässrigen Lösung des hydrophilen Polymers an den im Schritt (ii) erhaltenen Wänden durchgeführt wird.

25. Herstellungsverfahren nach Anspruch 23 oder 24, **dadurch gekennzeichnet, dass** der Schritt (ii) durch eine Plasmabehandlung durchgeführt wird.
